# EUROPÄISCHE PATENTSCHRIFT

(11) **EP 1 314 898 B1**
(45) Veröffentlichungstag und Bekanntmachung des Hinweises auf die Patenterteilung: **18.08.2004**
(21) Anmeldenummer: 02025543.6
(22) Anmeldetag: 14.11.2002
(51) Int. Cl.: F16C 9/04, F16C 35/077

(54) **Kurbeltriebanordnung, insbesondere für eine Verdichtereinheit**
Crank shaft assembly, in particular for a compressor unit
Mécanisme à bielle et manivelle en particulier pour une unité compresseur

(30) Priorität: 19.11.2001 DE 10156759
(43) Veröffentlichungstag der Anmeldung: 28.05.2003
(73) Patentinhaber: KNORR-BREMSE Systeme für Schienenfahrzeuge GmbH, 80809 München (DE)
(72) Erfinder: Hartl, Michael, 82008 Unterhaching (DE); Pröll, Gerhard, 85748 Garching (DE)
(74) Vertreter: Mattusch, Gundula

(56) Entgegenhaltungen:
- DE-A- 4 326 177
- DE-A- 19 531 365
- DE-A- 19 918 296
- DE-C- 851 575
- DE-C- 4 134 826
- FR-A- 700 255
- GB-A- 2 324 676
- PATENT ABSTRACTS OF JAPAN vol. 010, no. 249 (M-511), 27. August 1986 (1986-08-27) & JP 61 079069 A (AISIN WARNER LTD), 22. April 1986 (1986-04-22)

## Beschreibung

Die vorliegende Erfindung betrifft eine Kurbeltriebanordnung, im wesentlichen bestehend aus einer Kurbelwelle mit mindestens einem Kurbelzapfen, an dem über mindestens ein Wälzlager ein Leichtmetallpleuel drehbar befestigt ist. Insbesondere betrifft die Erfindung eine Verdichtereinheit mit einer solchen Kurbeltriebanordnung.

Kurbeltriebanordnungen der gattungsgemäßen Art kommen vorwiegend bei Verdichtereinheiten zur Erzeugung von Druckluft zur Anwendung. Eine solche Verdichtereinheit kann als einstufiger oder mehrstufiger Kolbenverdichter ausgeführt sein. Ein einstufiger Kolbenverdichter besteht gewöhnlich im wesentlichen aus einem Verdichtergehäuse, an dem ein Zylinder angeordnet ist, welcher einen Kolben zum Komprimieren angesaugter Luft enthält. Der Kolben vollführt seine bidirektionale Arbeitsbewegung stets über eine am Kolbenbolzen angelenkte Kurbeltriebanordnung. Die Kurbeltriebanordnung umfasst ein Pleuel, welches an dem dem Kolbenbolzen gegenüberliegenden Ende an einem Kurbelzapfen einer Kurbelwelle drehbar gelagert ist. Der Kurbelzapfen befindet sich im Scheitelpunkt einer Kröpfung der Kurbelwelle. Die Kurbelwelle ist drehbar innerhalb des Verdichtergehäuses wälzgelagert und wird über eine vorgeschaltete Antriebseinheit in Rotation versetzt.

Neben der vorstehend beschriebenen einstufigen Verdichtereinheit sind auch mehrstufige Verdichtereinheiten allgemein bekannt, welche gewöhnlich über mindestens eine Niederdruckstufe und mindestens eine nachgeschaltete Hochdruckstufe verfügen, um die angesaugte Luft höher komprimieren zu können. Hierfür sind entsprechend mehrere Zylinder vorhanden, deren innenliegende Kolben mit einer entsprechenden Anzahl von Pleuel über eine Kurbelwelle bidirektional angetrieben werden.

Die Verdichtereinheiten der hier interessierenden Art lassen sich in ölgeschmierte Verdichtereinheiten und trockenlaufende Verdichtereinheiten unterteilen. Ölgeschmierte Verdichtereinheiten verfügen über ein im Verdichtergehäuse befindliches Ölbad, welches zum Schmieren der Lagerstellen im Betrieb dient. In jüngster Zeit werden jedoch vermehrt trockenlaufende Verdichtereinheiten eingesetzt, bei denen dauergeschmierte Wälzlager zum Einsatz kommen. Trockenlaufende Verdichtereinheiten zeichnen sich insbesondere durch eine geringere Masse sowie eine höhere Montagefreundlichkeit aus. Zudem fällt hier kein aufwendig zu entsorgendes Getriebeöl an. Allerdings sind bei trockenlaufenden Kolbenverdichtern besondere Anforderungen an die Pleuellagerung gestellt. So muss die Pleuellagerung bei sehr hohen Temperaturen über einen Zeitraum von mehreren Jahren hinweg wartungsfrei funktionieren, ohne dass Dichtungsverschleiß entsteht, also das Schmierfett nicht aus den Lagerstellen rinnt. Zur Wartung sollten die Lagerstellen weiterhin nachschmierbar sein und dürfen sich selbst bei hohen Beanspruchungen nicht lösen.

Besondere Probleme entstehen im Zuge des zunehmenden Leichtbautrends. Um die Masse von Verdichtereinheiten weiter zu reduzieren, werden in jüngster Zeit Pleuel aus einem Leichtmetall, vorzugsweise aus einer Aluminiumlegierung verwendet.

Aus der DE 195 31 365 C2 geht ein derartiges Leichtmetallpleuel hervor. Das Leichtmetallpleuel besteht hier aus Aluminiumdruckguss und ist für eine Kurbeltriebanordnung einer Verdichtereinheit von Kompressoren bestimmt. Das größere der beiden Pleuelkopfaugen ist gewöhnlich über ein Wälzlager mit einem - hier nicht weiter beschriebenen - Kurbelzapfen einer Kurbelwelle verbunden. Durch die unterschiedlichen Wärmeausdehnungskoeffizienten und des hierin eingesetzten Wälzlagers, das gewöhnlich aus Stahl besteht, kann es bei hohen Temperaturen zum ungewollten Lösen des Lageraußenringes durch Spaltbildung und damit zu Verschleiß und im Extremfall zu einem Lagerschaden kommen.

Um diesen durch die unterschiedliche Wärmeausdehnung der Materialien verursachten Nachteil zu beheben, ist es bereits versucht worden, ein Durchdrehen des Lageraußenringes im Leichtmetallpleuel dadurch zu verhindern, dass das Wälzlager hierin eingeklebt ist. Weiterhin ist es bereits versucht worden, den Lageraußenring mit einem Diamantspray zu beschichten, um die Reibung zwischen dem Wälzlager und dem Leichtmetallpleuel zu erhöhen.

In der Praxis hat sich jedoch herausgestellt, dass diese Maßnahmen unzureichend sind. Ein mit Diamantspray beschichtetes Wälzlager ist nicht in der Lage, einen zuverlässigen Sitz über das gesamte auftretende Temperaturspektrum hinweg zu halten. Eine Klebung des Wälzlagers führt zu ungünstigen Montageeigenschaften; insbesondere ist eine Demontage eines eingeklebten Wälzlagers im Wartungsfall schwer oder nicht möglich. Bei einem Lagertausch wäre insoweit mit dem Wälzlager auch das fest hiermit verbundene Leichtmetallpleuel zu wechseln.

In der DE 851 575 wird zur Befestigung eines Wälzlagers in einem Gehäuse, dessen Material einen wesentlich höheren Wärmeausdehnungskoeffizienten aufweist als der des Wälzlagerwerkstoffes, ein Fixierring vorgeschlagen, der über eine Presspassung sowohl mit dem Wälzlager als auch mit einem Leichtmetallgehäuse drehfest verbunden ist. Der Fixierring besteht hier aus einem Material mit einem Wärmeausdehnungskoeffizienten, der sich dem des Gehäusewerkstoffes nähert und in jedem Fall größer ist als der des Lagerwerkstoffes.

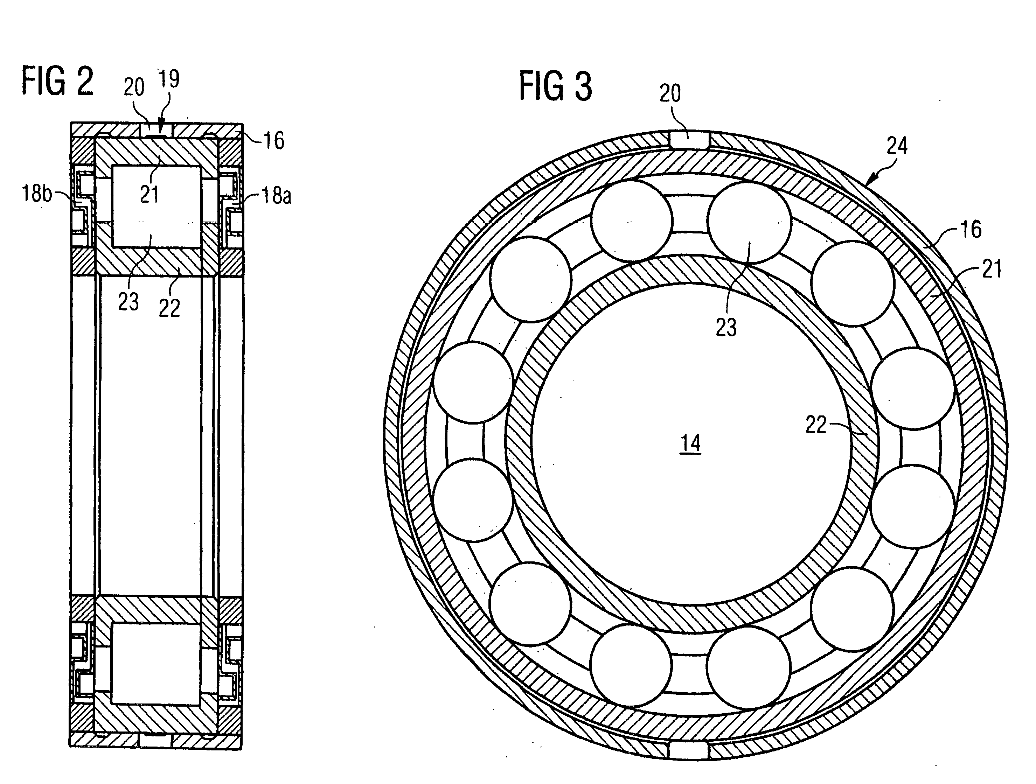

Aus der US 2,324,676 geht eine weitere allgemeine Lösung der Befestigung eines Wälzlagers in einem Gehäuse hervor. Auch hier kommt ein das Wälzlager umgebender Fixierring mit innen- und außenradialen Randbereichen zum Einsatz, der hierdurch die axiale Positionierung des Wälzlagers relativ zum Gehäuse sicherstellt. Der Fixierring kann gemäß eines Ausführungsbeispiels (Figur 3) formschlüssig mit dem Gehäuse drehfest verbunden sein.

Es ist die Aufgabe der vorliegenden Erfindung eine Kurbeltriebanordnung der vorstehend beschriebenen Art dahingehend weiter zu verbessern, dass sowohl eine einfache Montage und Demontage des Wälzlagers als auch eine zuverlässige Verbindung zwischen dem Leichtmetallpleuel und dem hierin eingesetzten Wälzlager gewährleistet ist.

Die Aufgabe wird ausgehend von einer Kurbeltriebanordnung gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass zwischen dem Wälzlager und dem Leichtmetallpleuel ein Fixierring angeordnet ist, der einerseits über eine Presspassung mit dem Wälzlager drehfest verbunden ist und der andererseits formschlüssig mit dem Leichtmetallpleuel drehfest verbunden ist, wobei der Fixierring aus einem Material mit zumindest annähernd gleichem spezifischen Wärmeausdehnungskoeffizienten wie das Material des Wälzlagers besteht.

Die erfindungsgemäße Lösung bietet den Vorteil, dass bei einer Temperaturerhöhung im Betriebsfall ein Durchdrehen des Wälzlagers relativ zum Leichtmetallpleuel wegen des Formschlusses vermieden wird. Durch den Formschluss zwischen dem Fixierring und dem Leichtmetallpleuel wird ein höherer Grad an Belastbarkeit erzielt. Eine wärmebedingte Spaltbildung zwischen beiden Bauteilen wirkt sich nicht mehr auf die Zuverlässigkeit der Verbindung nachteilig aus. Dagegen ist der durch die Presspassung zwischen dem Wälzlager und dem Fixierring realisierte Kraftschluss wegen des annähernd gleichen spezifischen Wärmeausdehnungskoeffizienten beider Bauteile unempfindlich gegenüber Temperaturänderungen. Somit kann insgesamt ein Lösen des Wälzlagers im Leichtmetallpleuel über ein breites Temperaturspektrum hinweg vermieden werden. Die erfindungsgemäße kombinierte kraft- und formschlüssige Verbindung ist darüber hinaus in einfacher Weise montierbar oder demontierbar, so dass im Wartungsfall ein rascher Austausch eines Wälzlagers erfolgen kann.

Gemäß einer weiteren die Erfindung verbessernden Maßnahme ist vorgesehen, dass der Fixierring neben einer Aufnahme des mindestens einen Wälzlagers auch zur Aufnahme von axial benachbart zum Wälzlager angeordneten Dichtringen dient. Die Dichtringe kapseln hierbei den geschmierten Innenbereichs des Wälzlagers ab. Derartig angeordnete Dichtringe gewährleisten bei Anwendung in einer trockenlaufenden Verdichtereinheit in einfacher Weise die erforderliche Dauerschmierung des Lagerbereichs. Vorzugsweise kommen hierfür Dichtringe in Betracht, die nach Art eines Radialwellendichtrings ausgebildet sind. Die Radialwellendichtringe können über ihren Außenumfang fest in den Bereich der Enden des Fixierringes eingepresst werden. Diese aus dem Fixierring, Wälzlager und Dichtringen bestehende Anordnung kann vorteilhafterweise als vormontierte Baueinheit in Form einer Lagerpatrone zur Verfügung gestellt werden. Die Lagerpatrone ermöglicht die Montage und Demontage ihrer Funktionsbestandteile in einem einzigen Montageschritt. Daneben ist es auch denkbar, das Wälzlager nach Art eines handelsüblichen gekapselten Wälzlagers auszuführen, welches in der erfindungsgemäßen Weise mit dem Fixierring zusammenwirken kann.

Gemäß einer weiteren die Erfindung verbessernden Maßnahme kann zur Bildung eines Fettreservoirs zwischen dem Wälzlager und den Dichtringen ringförmige Zwischenräume vorgesehen werden. Der ringförmige Zwischenraum ist außenradial vorzugsweise derart ausgebildet, dass aufgrund der im Betrieb auftretenden Fliehkräfte das Schmierfett in den zu schmierenden Wälzlagerbereich quasi von selbst geleitet wird. Es ist jedoch auch denkbar dieses durch aktive Mittel zu bewerkstelligen, wie beispielsweise durch mitdrehende Schaufelräder, einem Schneckentrieb oder dergleichen.

Vorzugsweise besteht das Wälzlager aus einem Lageraußenring und einem Lagerinnenring, zwischen denen geeignete Wälzkörper - wie Kugelelemente oder Zylinderelemente - angeordnet sind. Das Wälzlager kann ganz oder teilweise aus Stahl, aus Keramik oder aus einem anderen geeigneten Lagerwerkstoff hergestellt sein. Demgegenüber besteht das Leichtmetallpleuel vorzugsweise aus einer solchen Aluminium-Legierung, welche die erforderliche Festigkeit des Bauteils gewährleistet. Der Fixierring ist vorzugsweise aus einer Stahllegierung hergestellt, welche in der vorstehend beschriebenen Weise mit dem vorzugsweise ebenfalls aus Stahl bestehenden Wälzlageraußenring im kraftschlüssigen Kontakt steht.

Die formschlüssige Verbindung zwischen dem Fixierring und dem Leichtmetallpleuel erfolgt vorteilhafter Weise über eine Rändelprofilierung. Daneben sind auch andere Profilierungen geeignet, welche durch Formschluss ein Verdrehen des Wälzlagers gegenüber dem Leichtmetallpleuel verhindern. Die formschlüssige Verbindung kann gemäß einer weiteren bevorzugten Ausführungsform auch über mindestens einen radial wirkenden Stift oder dergleichen erfolgen, welcher als separates Bauteil in korrespondierende radial gerichtete Bohrungen eingebracht werden kann oder ein fester Bestandteil des Leichtmetallpleuels oder ein fester Bestandteil des Fixierrings ist. Bei den beiden letztgenannten Varianten wirkt der Stift mit einer korrespondierenden Ausnehmung im gegenüberliegenden Bauteil formschlüssig zusammen.

Der Fixierring ist vorzugsweise im wesentlichen rohrförmig ausgebildet. Daneben ist es auch denkbar, den Fixierring an zumindest einem Ende mit einem nach radial innen oder radial außen gerichteten Randbereich zu versehen, um einen höheren axialen Halt relativ zum benachbarten Bauteil sicher zu stellen.

Darüber hinaus kann der Fixierring auch eine innenradial verlaufende Schmiernut aufweisen, die mindestens einen korrespondierenden Durchbruch im Fixierring zugeordnet ist, um eine Schmierung der Lagerstelle von außen her zu gewährleisten. Dieses ist insbesondere für eine Nachschmierung der Lagerstelle über vorzugsweise im Bereich des Leichtmetallpleuels vorgesehene Schmiernippel von Vorteil. Das Schmierfett gelangt somit ausgehend vom Schmiernippel durch einen im Leichtmetallpleuel vorgesehenen Kanal durch den Durchbruch im Fixierring hindurch und verteilt sich entlang der innenradialen Schmiernut um das Wälzlager herum, um über einen korrespondierenden Durchbruch im Außenring des Wälzlagers schließlich in den Bereich der Wälzkörper zu gelangen.

Zur Verbesserung der Montagefreundlichkeit ist es weiterhin von Vorteil, wenn das Leichtmetallpleuel im Bereich des Wälzlagers geteilt ausgeführt ist. Die im Leichtmetallpleuel zur Aufnahme des Wälzlagers vorgesehene geteilte Lagerschale kann durch eine Schraubverbindung zusammengehalten werden. Ein weiterer Vorteil des geteilten Leichtmetallpleuels besteht darin, dass hiermit relativ große Öffnungen im Verdichtergehäuse zum Einführen eines anderenfalls auf der Kurbelwelle vorzumontierenden Kurbeltriebes vermieden werden.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
Fig. 1 einen Längsschnitt durch eine Verdichtereinheit im Bereich einer Kurbeltriebanordnung,
Fig. 2 einen Querschnitt durch eine Lagerpatrone als vormontierte Baueinheit für die Verdichtereinheit gemäß Fig. 1, und
Fig. 3 einen Längsschnitt durch die Lagerpatrone gemäß Fig. 2.

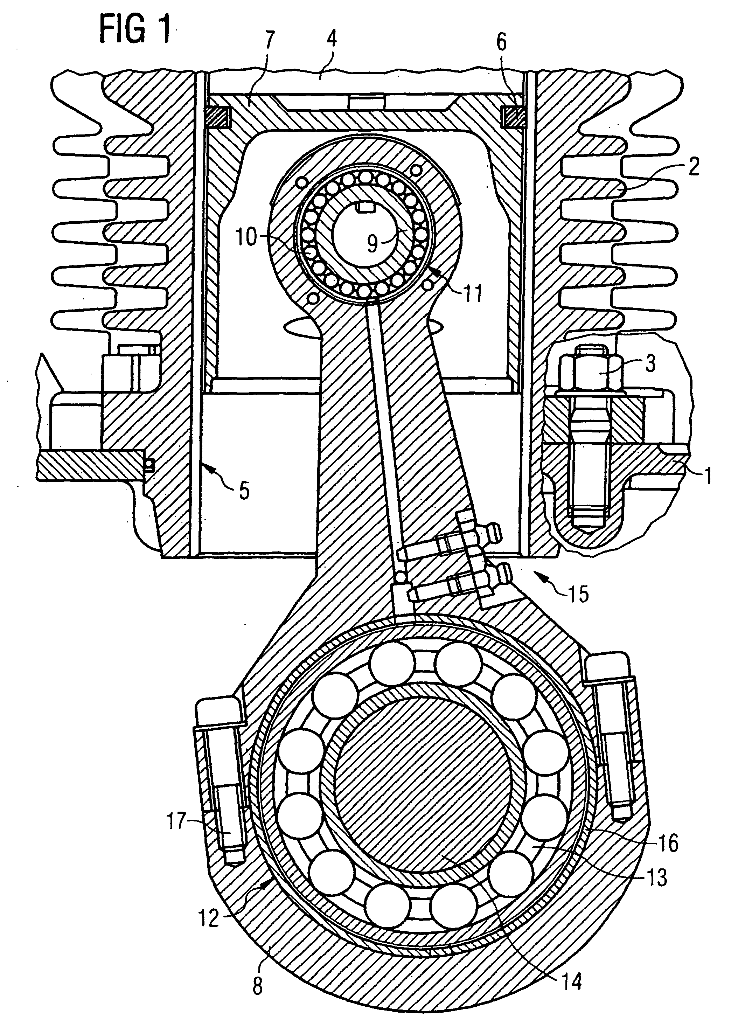

Die in der Fig. 1 dargestellte Kurbeltriebanordnung ist Bestandteil einer einstufigen Verdichtereinheit, an deren Verdichtergehäuse 1 ein luftgekühlter Zylinder 2 durch eine Schraubverbindung 3 lösbar befestigt ist. (Weggeschnitten ist in dieser Darstellung der erfindungswesentliche Bereich des Zylinderkopfes mit einer hier angeordneten Ventilplatte). Der Zylinder 2 umschließt einen innenliegenden Kolbenraum 4, in dem ein Kolben 7 zum Komprimieren von Luft hin- und herbewegbar angeordnet ist. An der Innenwandung einer in den Zylinder 2 eingepressten Laufbuchse 5 kommt ein dynamischer Dichtring 6 zur Anlage, der in einer außenradial in einem Kolben 7 angeordneten Umfangsnut gehalten ist. Der Kolben 7 vollzieht durch seine Arbeitsbewegung ein wechselndes Ansaugen und Komprimieren von Luft.

Zu diesem Zwecke ist am Kolben 7 ein Leichtmetallpleuel 8 schwenkbar gelagert. Die Lagerung erfolgt über einen Kolbenbolzen 9, welcher radial durch den Kolben 7 verläuft und ein Nadellager 10 trägt. Das Nadellager 10 bildet die Lagerstelle gegenüber dem Leichtmetallpleuel 8. Zur Aufnahme des Nadellagers 10 ist eine korrespondierende Ausnehmung 11 am kolbenseitigen Endbereich des Leichtmetallpleuels 8 vorgesehen.

Im gegenüberliegenden Endbereich des Leichtmetallpleuels 8 ist eine Ausnehmung 12 5 angeordnet, die zur Aufnahme eines Wälzlagers 13 dient. Das Wälzlager 13 ist hier nach Art eines Zylinderrollenlagers ausgeführt, welches eine Drehlagerung des Leichtmetallpleuels 8 gegenüber der Kurbelwelle 14 ermöglicht. Die Kurbelwelle 14 wiederum ist drehbar innerhalb des Verdichtergehäuses 1 gelagert und ist von einer - hier nicht gezeigten - Antriebseinheit in Drehbewegung versetzbar. Die Kurbeltriebanordnung wandelt diese Drehbewegung in eine bidirektionale Bewegung des Kolbens zum Komprimieren von Luft um.

Im vorliegenden Ausführungsbeispiel ist die Verdichtereinheit trockenlaufend ausgeführt. . Eine Nachschmierung des kurbelwellenseitigen Wälzlagers 13 sowie des kolbenseitigen Nadellagers 10 kann über eine am Leichtmetallpleuel 8 angeordnete Schmiernippelanordnung 15 mit weiterführenden pleuelinternen Kanälen erfolgen. Um bei Temperaturänderungen ein Lösen des Wälzlagers 13 innerhalb der Ausnehmung 12 des Leichtmetallpleuels 8 aufgrund unterschiedlicher Wärmeausdehnungskoeffizienten der benachbarten Bauteile zu vermeiden, ist zwischen dem Wälzlager 13 und dem Leichtmetallpleuel 8 ein Fixierring 16 angeordnet.

Der Fixierring 16 steht einerseits über eine Presspassung mit dem Wälzlager 13 drehfest in Verbindung; andererseits ist der Fixierring 16 formschlüssig mit dem Leichtmetallpleuel 8 drehfest verbunden. Da der Fixierring (16) aus einem Material mit gleichem spezifischen Wärmeausdehnungskoeffizienten wie das Material des Wälzlagers 13 besteht, ist ein Lösen der Presspassung nicht zu befürchten. Ein aufgrund des unterschiedlichen materialbedingten Ausdehnungsverhaltens zwischen Leichtmetallpleuel (8) und Fixierring (16) entstehendes Spaltspiel wird über die formschlüssige Verbindung beider benachbarter Bauteile kompensiert, so dass eine drehfeste Verbindung sichergestellt ist. In diesem Ausführungsbeispiel bestehen das Wälzlager 13 sowie der Fixierring 16 aus Stahl, wogegen das Leichtmetallpleuel 8 aus einer Aluminium-Legierung hergestellt ist. Das Leichtmetallpleuel 8 ist im Bereich der Ausnehmung 12 für das Wälzlager 13 geteilt aufgebaut, wobei zwei Schrauben 17 zur Verbindung vorgesehen sind, um eine Montage oder Demontage des Leichtmetallpleuels 8 am Wälzlager 13 zu ermöglichen.

Wie aus der Fig. 2 ersichtlich ist, dient der Fixierring 16 neben einer Aufnahme des Wälzlagers 13 auch zur Aufnahme von Dichtringen 18a und 18b, die zum Wälzlager 13 benachbart angeordnet sind. Die Dichtringe 18a und 18b dienen der Abkapselung des geschmierten Bereichs des Wälzlagers 13. Die Dichtringe 18a und 18b sind beidseits des rohrförmigen Fixierringes 16 eingepresst. Wie abgebildet bilden der Fixierring 16 mit dem Wälzlager 13 und den beidseitig benachbart angeordneten Dichtringen 18a und 18b eine Lagerpatrone als vormontierte Baueinheit. Zur nachträglichen Schmierung dieser vormontierten Baueinheit ist im Fixierring 16 eine innenradial umlaufende Schmiernut 19 vorgesehen, die mit mindestens einem korrespondierenden Durchbruch 20 im Fixierring 16 in Verbindung steht. Hierüber folgt die von den - hier nicht gezeigten - Schmiernippeln15 ausgehende Nachschmierung.

Gemäß Fig. 3 besteht das Wälzlager 13 aus einem äußeren Lagerring 21 sowie einem inneren Lagerring 22 sowie dazwischen angeordneten Wälzkörpern 23, die hier zylinderförmig ausgebildet sind. Der innere Lagerring 22 steht mit einem Kurbelzapfen der Kurbelwelle 14 in Verbindung, wogegen der äußere Lagerring 21 des Wälzlagers 13 in den diesen umgebenden Fixierring 16 eingepresst ist. Außenradial weist der Fixierring 16 eine gerändelte Oberfläche 24 auf, die mit einer korrespondierenden - hier nicht gezeigten - ebenfalls gerändelten Oberfläche der Ausnehmung 12 des Leichtmetallpleuels 8 unter Bildung einer formschlüssigen Verbindung zusammenwirkt, um bei Temperaturänderungen ein Lösen des Wälzlagers 13 gegenüber dem Leichtmetallpleuel 8 erfindungsgemäß zu vermeiden.

Die vorliegende Erfindung ist nicht beschränkt auf das vorstehend beschriebene bevorzugte Ausführungsbeispiel. Es sind vielmehr auch Abwandlungen hiervon denkbar, die vom Schutzbereich der nachfolgenden Ansprüche umfasst sind. Insbesondere ist die vorliegende Erfindung nicht beschränkt auf die Ausgestaltung der formschlüssigen Verbindungsmittel zwischen dem Leichtmetallpleuel 8 und dem Wälzlager 13 als Rändelung. Es ist auch denkbar hier anders geartete formschlüssige Verbindungsmittel, wie beispielsweise eine Stiftanordnung oder dergleichen vorzusehen. Obwohl die 5 vorliegende Erfindung sich auf das kurbelwellenseitige, eine Drehbewegung lagernde Wälzlager 13 bezieht, ist es prinzipiell auch denkbar, vergleichbare formschlüssige Verbindungsmittel auch seitens des kolbenbolzenseitigen Nadellagers 10 vorzusehen, über welches jedoch lediglich eine Schwenkbewegung gelagert ist.

### Bezugszeichenliste

- **1**: Verdichtergehäuse
- **2**: Zylinder
- **3**: Schraubverbindung
- **4**: Kolbenraum
- **5**: Laufbuchse
- **6**: Dichtring
- **7**: Kolben
- **8**: Leichtmetallpleuel
- **9**: Kolbenbolzen
- **10**: Nadellager
- **11**: Ausnehmung
- **12**: Ausnehmung
- **13**: Wälzlagers
- **14**: Kurbelwelle
- **15**: Schmiernippelanordnung
- **16**: Fixierring
- **17**: Schraube
- **18**: Dichtring
- **19**: Schmiernut
- **20**: Durchbruch
- **21**: Lagerring
- **22**: Lagerring
- **23**: Wälzkörper
- **24**: Oberfläche, gerändelt

## Patentansprüche

1. Kurbeltriebanordnung, im wesentlichen bestehend aus einer Kurbelwelle (14) mit mindestens einem Kurbelzapfen, an dem ein Leichtmetallpleuel (8) drehbar befestigt ist,
**dadurch gekennzeichnet, dass** zwischen dem als Wälzlager (13) ausgebildeten Pleuellager und dem Leichtmetallpleuel (8) ein Fixierring (16) angeordnet ist, der einerseits über eine Presspassung mit dem Wälzlager (13) drehfest verbunden ist und der andererseits formschlüssig mit dem Leichtmetallpleuel (8) drehfest verbunden ist, wobei der Fixierring (16) aus einem Material mit zumindest annähernd gleichem spezifischen Wärmeausdehnungskoeffizienten wie das Material des Wälzlagers (13) besteht, um bei Temperaturänderung ein Lösen des Wälzlagers (13) gegenüber dem Leichtmetallpleuel (8) zu vermeiden.

2. Kurbeltriebanordnung gemäß Anspruch 1,
**dadurch gekennzeichnet, dass** der Fixierring (16) neben einer Aufnahme des mindestens einen Wälzlagers (13) auch zur Aufnahme von axial zum Wälzlager (13) benachbart angeordneten Dichtringen (18a, 18b) vorgesehen ist, die den geschmierten Bereich des Wälzlagers (13) abkapseln.

3. Kurbeltriebanordnung gemäß Anspruch 2,
**dadurch gekennzeichnet, dass** die Abkapselung unter Bildung eines zwischen dem Wälzlager (13) und den Dichtringen (18a bzw. 18b) angeordneten ringförmigen Zwischenraumes zur Bildung eines Fettreservoirs erfolgt.

4. Kurbeltriebanordnung gemäß Anspruch 3,
**dadurch gekennzeichnet, dass** der ringförmige Zwischenraum außenradial derart ausgebildet ist, dass aufgrund der im Betrieb auftretenden Fliehkräfte das Schmierfett in den zu schmierenden Wälzlagerbereich geleitet wird.

5. Kurbeltriebanordnung gemäß Anspruch 2,
**dadurch gekennzeichnet, dass** die im Fixierring (16) vorgesehenen Dichtringe (18a, 18b) als Radialwellendichtringe ausgebildet sind, und in den Bereich der Enden des Fixierringes (16) fest eingepresst sind.

6. Kurbeltriebanordnung gemäß Anspruch 1,
**dadurch gekennzeichnet, dass** das Wälzlager (13) aus Stahl oder aus Keramik hergestellt ist.

7. Kurbeltriebanordnung gemäß Anspruch 1,
**dadurch gekennzeichnet, dass** das Leichtmetallpleuel (8) aus einer Aluminium-Legierung hergestellt ist.

8. Kurbeltriebanordnung gemäß Anspruch 1,
**dadurch gekennzeichnet, dass** der Fixierring (16) aus einer Stahllegierung besteht.

9. Kurbeltriebanordnung gemäß Anspruch 1,
**dadurch gekennzeichnet, dass** die formschlüssige Verbindung zwischen dem Fixierring (16) und dem Leichtmetallpleuel (8) über eine Rändelprofilierung erfolgt.

10. Kurbeltriebanordnung gemäß Anspruch 1,
**dadurch gekennzeichnet, dass** die formschlüssige Verbindung zwischen dem Fixierring (16) und dem Leichtmetallpleuel (8) über mindestens einen radial wirkenden Stift erfolgt.

11. Kurbeltriebanordnung gemäß Anspruch 8,
**dadurch gekennzeichnet, dass** der Stift ein separates Bauteil ist oder Bestandteil des Leichtmetallpleuels (8) oder Bestandteil des Fixierrings (16) ist.

12. Kurbeltriebanordnung gemäß Anspruch 1,
**dadurch gekennzeichnet, dass** der Fixierring (16) im wesentlichen rohrförmig ausgebildet ist.

13. Kurbeltriebanordnung gemäß Anspruch 10,
**dadurch gekennzeichnet, dass** der Fixierring (16) eine innenradiale Schmiernut (19) aufweist, die mit mindestens einem korrespondierenden Durchbruch (20) im Fixierring (16) in Verbindung steht, um eine Schmierung der Lagerstelle zu gewährleisten.

14. Kurbeltriebanordnung nach einem der vorstehenden Ansprüche,
**dadurch gekennzeichnet, dass** der Fixierring (16) gemeinsam mit dem hiervon umschlossenen Wälzlager (13) sowie den Dichtringen (18a, 18b), eine vormontierte Baueinheit bildet.

15. Kurbeltriebanordnung gemäß einem der vorstehenden Ansprüche,
**dadurch gekennzeichnet, dass** das Leichtmetallpleuel (8) im Bereich des Wälzlagers (13) geteilt ausgeführt ist.

16. Verdichtereinheit zum komprimieren von Luft mit mindestens einem Zylinder (2), dessen zugeordneter Kolben (7) mit einer Kurbeltriebanordnung gemäß einem der vorstehenden Ansprüche ausgestattet ist.

17. Verdichtereinheit gemäß Anspruch 16,
**dadurch gekennzeichnet, dass** die Verdichtereinheit trockenlaufend ausgeführt ist.

18. Verdichtereinheit nach Anspruch 16, **dadurch gekennzeichnet, dass** die Verdichtereinheit zumindest einstufig ausgeführt ist.

## Claims

1. A crankshaft drive arrangement consisting essentially of a crankshaft (14) having at least one crank pin to which an alloy connecting rod (8) is fixed in such a manner that it is able to rotate,
**characterised in that**
positioned between the connecting rod bearing which is designed as an anti-friction bearing (13) and the alloy connecting rod (8) is a fixing ring (16) which is connected on one hand to the anti-friction bearing (13) by means of a force-fit in such a manner that it is unable to rotate and on the other to the alloy connecting rod (8) in a positive-fit connection in such a manner that it is unable to rotate, the fixing ring (16) being made of a material with at least approximately the same specific thermal expansion coefficients as the material of the anti-friction bearing (13) in order to prevent the detachment of the anti-friction bearing (13) from the alloy connecting rod (8) in the event of a change in temperature.

2. A crankshaft drive arrangement in accordance with claim 1,
**characterised in that**
in addition to receiving the at least one anti-friction bearing (13), the fixing ring (16) also serves to receive sealing rings (18a, 18b) positioned axially adjacent to the anti-friction bearing (13) which seal the lubricated area of the anti-friction bearing (13).

3. A crankshaft drive arrangement in accordance with claim 2,
**characterised in that**
this sealing, and the resulting formation of an annular space between the anti-friction bearing (13) and the sealing rings (18a, 18b), leads to the formation of a lubricant reservoir.

4. A crankshaft drive arrangement in accordance with claim 3,
**characterised in that**
the outer periphery of the annular space is designed in such a manner that the lubricant is fed into the anti-friction bearing area to be lubricated by the centrifugal forces occurring during operation.

5. A crankshaft drive arrangement in accordance with claim 2,
**characterised in that**
the sealing rings (18a, 18b) provided in the fixing ring (16) are designed as radial shaft seals and are pressed tightly into the area of the ends of the fixing ring (16).

6. A crankshaft drive arrangement in accordance with claim 1,
**characterised in that**
the anti-friction bearing ( 13) is made of steel or ceramic.

7. A crankshaft drive arrangement in accordance with claim 1,
**characterised in that**
the alloy connecting rod (8) is made of an aluminium alloy.

8. A crankshaft drive arrangement in accordance with claim 1,
**characterised in that**
the fixing ring (16) is made of a steel alloy.

9. A crankshaft drive arrangement in accordance with claim 1,
**characterised in that**
the positive-fit connection between the fixing ring (16) and the alloy connecting rod (8) takes the form of a knurled profile.

10. A crankshaft drive arrangement in accordance with claim 1,
**characterised in that**
the positive-fit connection between the fixing ring (16) and the alloy connecting rod (8) takes the form of at least one radially acting pin.

11. A crankshaft drive arrangement in accordance with claim 8,
**characterised in that**
the pin is a separate component or an integral part of the alloy connecting rod (8) or an integral part of the fixing ring (16).

12. A crankshaft drive arrangement in accordance with claim 1,
**characterised in that**
the fixing ring (16) is essentially tubular.

13. A crankshaft drive arrangement in accordance with claim 10,
**characterised in that**
the fixing ring (16) has a lubricating groove (19) running around its inner periphery which is connected to at least one corresponding opening (20) in the fixing ring (16) in order to guarantee the lubrication of the bearing.

14. A crankshaft drive arrangement in accordance with one of the preceding claims,
**characterised in that**
the fixing ring (16) together with the anti-friction bearing (13) which it surrounds and the sealing rings (18a, 18b) form a pre-assembled unit.

15. A crankshaft drive arrangement in accordance with one of the preceding claims,
**characterised in that**
the alloy connecting rod (8) is split in the area of the anti-friction bearing (13).

16. A compressor unit for compressing air having at least one cylinder (2), the piston (7) associated therewith being fitted with a crankshaft drive arrangement in accordance with one of the preceding claims,

17. A compressor unit in accordance with claim 16,
**characterised in that**
the compressor unit is designed as a dry-running compressor unit.

18. A compressor unit in accordance with claim 16,
**characterised in that**
the compressor unit is of at least single-stage design.

## Revendications

1. Mécanisme à bielle et manivelle, constitué pour l'essentiel d'un vilebrequin (14) pourvu d'au moins un maneton sur lequel une bielle (8) en alliage léger est montée tournante,
**caractérisé en ce qu'**une bague (16) d'immobilisation est disposée entre le coussinet de bielle réalisé sous forme de roulement (13) et la bielle (8) en alliage léger, bague qui est d'une part solidaire en rotation du roulement (13) par l'intermédiaire d'un ajustement serré et d'autre part solidaire en rotation de la bielle (8) en alliage léger par assemblage à complémentarité de forme, la bague (16) d'immobilisation étant constituée d'un matériau ayant un coefficient de dilatation thermique spécifique au moins approximativement identique à celui du matériau du roulement (13), afin d'empêcher que le roulement (13) se détache de la bielle (8) en alliage léger lors d'une variation de température.

2. Mécanisme à bielle et manivelle suivant la revendication 1,
**caractérisé en ce que** la bague (16) d'immobilisation est prévue pour recevoir, outre le roulement (13) au moins unique, des bagues (18a, 18b) d'étanchéité disposées au voisinage axial du roulement (13), bagues qui enferment la région lubrifiée du roulement (13).

3. Mécanisme à bielle et manivelle suivant la revendication 2,
**caractérisé en ce que** l'enfermement s'effectue en formant un espace intermédiaire annulaire destiné à former un réservoir de graisse, disposé entre le roulement (13) et les bagues (18a, 18b) d'étanchéité.

4. Mécanisme à bielle et manivelle suivant la revendication 3,
**caractérisé en ce que** l'espace intermédiaire annulaire est formé en position radialement extérieure de telle sorte que, en vertu des forces centrifuges apparaissant en service, la graisse de lubrification est dirigée dans la région à lubrifier du roulement.

5. Mécanisme à bielle et manivelle suivant la revendication 2,
**caractérisé en ce que** les bagues (18a, 18b) d'étanchéité prévues dans la bague (16) d'immobilisation sont réalisées sous forme de bagues à lèvres avec ressort, et sont fixement emmanchées dans la région des extrémités de la bague (16) d'immobilisation.

6. Mécanisme à bielle et manivelle suivant la revendication 1,
**caractérisé en ce que** le roulement (13) est réalisé en acier ou en matériau céramique.

7. Mécanisme à bielle et manivelle suivant la revendication 1,
**caractérisé en ce que** la bielle (8) en alliage léger est réalisée en un alliage d'aluminium.

8. Mécanisme à bielle et manivelle suivant la revendication 1,
**caractérisé en ce que** la bague (16) d'immobilisation est constituée d'un alliage d'acier.

9. Mécanisme à bielle et manivelle suivant la revendication 1,
**caractérisé en ce que** l'assemblage à complémentarité de forme entre la bague (16) d'immobilisation et la bielle (8) en alliage léger s'effectue au moyen d'un moletage.

10. Mécanisme à bielle et manivelle suivant la revendication 1,
**caractérisé en ce que** l'assemblage en engagement positif entre la bague (16) d'immobilisation et la bielle (8) en alliage léger s'effectue au moyen d'au moins une broche agissant radialement.

11. Mécanisme à bielle et manivelle suivant la revendication 8,
**caractérisé en ce que** la broche est une pièce séparée ou fait partie intégrante de la bielle (8) en alliage léger ou partie intégrante de la bague (16) d'immobilisation.

12. Mécanisme à bielle et manivelle suivant la revendication 1,
**caractérisé en ce que** la bague (16) d'immobilisation est réalisée de forme essentiellement tubulaire.

13. Mécanisme à bielle et manivelle suivant la revendication 10,
**caractérisé en ce que** la bague (16) d'immobilisation comporte une rainure (19) de lubrification en position radialement intérieure, qui communique avec au moins un percement (20) correspondant dans la bague (16) d'immobilisation, afin de garantir la lubrification du palier.

14. Mécanisme à bielle et manivelle suivant l'une des revendications précédentes, **caractérisé en ce que** la bague (16) d'immobilisation constitue une unité pré-assemblée conjointement avec le roulement (13) qu'elle entoure ainsi qu'avec les bagues (18a, 18b) d'étanchéité.

15. Mécanisme à bielle et manivelle suivant l'une des revendications précédentes, **caractérisé en ce que** la bielle (8) en alliage léger est fendue dans la région du roulement (13).

16. Unité de compresseur pour comprimer de l'air, comportant au moins un cylindre (2) dont le piston (7) associé est équipé d'un mécanisme à bielle et manivelle suivant l'une des revendications précédentes.

17. Unité de compresseur suivant la revendication 16,
**caractérisée en ce que** l'unité de compresseur est réalisée à piston sec.

18. Unité de compresseur suivant la revendication 16,
**caractérisée en ce que** l'unité de compresseur est réalisée à au moins un étage.
